# EUROPÄISCHE PATENTSCHRIFT

(11) **EP 2 087 647 B1**
(45) Veröffentlichungstag und Bekanntmachung des Hinweises auf die Patenterteilung: **20.08.2014**
(21) Anmeldenummer: 07822158.7
(22) Anmeldetag: 02.11.2007
(51) Int. Cl.: H04L 12/26, H04J 3/14, H04L 12/403

(54) **VORRICHTUNG UND VERFAHREN ZUR MANIPULATION VON KOMMUNIKATIONS-BOTSCHAFTEN**
DEVICE AND METHOD FOR MANIPULATING COMMUNICATION MESSAGES
DISPOSITIF ET PROCÉDÉ DE MANIPULATION DE MESSAGES DE COMMUNICATION

(30) Priorität: 03.11.2006 DE 102006052267; 01.10.2007 DE 102007047248
(43) Veröffentlichungstag der Anmeldung: 12.08.2009
(73) Patentinhaber: Robert Bosch GmbH, 70442 Stuttgart (DE)
(72) Erfinder: HAHN, Siegfried, 75428 Illingen (DE)
(86) Internationale Anmeldenummer: PCT/EP2007/061827
(87) Internationale Veröffentlichungsnummer: WO 2008/053040

(56) Entgegenhaltungen:
- GB-A- 2 417 865

## Beschreibung

### Stand der Technik

Die vorliegende Erfindung betrifft eine Vorrichtung und ein Verfahren zur Manipulation von Kommunikations-Botschaften in einem Kommunikationssystem. Das Kommunikationssystem umfasst einen Datenbus und mehrere daran angeschlossene Knoten. Außerdem weist das Kommunikationssystem Mittel zur Übertragung von Botschaften in Botschaftsrahmen zu fest vorgegebenen Kommunikationszyklen auf. Die zu manipulierenden Botschaften sind für mindestens einen Knoten des Kommunikationssystems bestimmt.

Die Erfindung betrifft außerdem ein Kommunikationssystem, das einen Datenbus und mehrere daran angeschlossene Netzwerkknoten umfasst. Außerdem weist das Kommunikationssystem Mittel zum Übertragen von Kommunikations-Botschaften zwischen den Knoten über den Datenbus in Botschaftsrahmen zu fest vorgegebenen Kommunikationszyklen auf.

Die Vernetzung von Steuergeräten, Sensorik und Aktuatorik mit Hilfe eines Kommunikationssystems und einer Kommunikationsverbindung, beispielsweise in Form eines Datenbusses, hat in den letzten Jahren insbesondere im Kraftfahrzeugbereich, aber auch im Maschinenbau und dort vor allem im Werkzeugmaschinenbereich sowie in der Automatisierung stark zugenommen. Durch die Anbindung mehrerer Teilnehmer oder Knoten an einen Datenbus in einem Kommunikationssystem können durch Verteilung von Funktionen auf mehrere Knoten Synergieeffekte erzielt werden. Man spricht in diesem Zusammenhang auch von verteilten Systemen.

Die Kommunikation zwischen verschiedenen Teilnehmern eines solchen Kommunikationssystems findet über einen Datenbus statt. Der Kommunikätionsverkehr auf dem Bussystem, Zugriffs- und Empfangsmechanismen, sowie Fehlerbehandlung werden über ein Datenübertragungs- oder Kommunikationsprotokoll geregelt. Ein aus dem Stand der Technik bekanntes Protokoll, welches eine Übertragung von Botschaften in Botschaftsrahmen zu fest vorgegebenen Kommunikationszyklen vorsieht, ist beispielsweise das FlexRay-Protokoll. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf den Datenbus haben. Die Zeitschlitze wiederholen sich dabei in einem fest vorgegebenen Kommunikationszyklus, so dass der Zeitpunkt, zu dem eine Botschaft über den Datenbus übertragen wird, exakt vorausgesagt werden kann und der Buszugriff somit deterministisch erfolgt.

Um die Bandbreite für die Übertragung von Botschaften auf dem Datenbus optimal zu nutzen, unterteilt FlexRay den Kommunikationszyklus in einen statischen und einen dynamischen Teil. Die festen Zeitschlitze befinden sich dabei im statischen Teil am Anfang eines Kommunikationszyklus. Im dynamischen Teil wird die Größe der Zeitschlitze dynamisch vorgegeben. Darin wird der exklusive Buszugriff jeweils nur für eine kurze Zeit, für die Dauer mindestens eines sogenannten Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie für die Übertragung von Informationen auch tatsächlich benötigt wird. Durch den dynamischen Teil eines Kommunikationszyklus wird im FlexRay trotz des deterministischen Charakters auch eine ereignisgesteuerte Botschaftsübertragung möglich.

In FlexRay sind zwei separate Kanäle zur Datenübertragung vorgesehen. Dabei kommuniziert FlexRay über eine oder zwei physikalisch getrennte Leitungen je Kanal mit einer Datenrate von jeweils maximal 10 Mbit/sec. Selbstverständlich kann FlexRay auch mit niedrigeren Datenraten betrieben werden. Die Leitungen der beiden Kanäle entsprechen dabei der physikalischen Schicht, insbesondere des sogenannten OSI (Open System Architecture)- Schichtenmodells. Es ist möglich, die beiden Kanäle zur redundanten und damit fehlertoleranten Übertragung von Botschaften zu nutzen, wobei dann zeitgleich die gleichen Daten über beide Kanäle übertragen werden. Alternativ können über die beiden Kanäle auch unterschiedliche Botschaften übertragen werden, wodurch sich dann die Datenrate in dem FlexRay-Kommunikationssystem verdoppeln könnte. Es ist auch denkbar, dass sich das über die Verbindungsleitungen übertragene Signal aus der Differenz von über die beiden Leitungen übertragenen Signalen ergibt. Schließlich kann für die Datenübertragung auch lediglich ein Kanal genutzt werden, wobei dann der andere Kanal ungenützt und frei ist. Derzeit sind typische FlexRay-Anwendungen entweder einkanalig oder zweikanalig redundant ausgebildet. Die physikalische Schicht ist derart ausgestaltet, dass sie eine elektrische, aber auch optische Übertragung des oder der Signale über die Leitung (en) oder eine Übertragung auf anderem Wege ermöglicht.

Um in dem Kommunikationssystem synchrone Funktionen zu realisieren und die Bandbreite durch möglichst kleine Abstände (Freizeiten) zwischen zwei Botschaften zu optimieren, benötigen die Knoten in dem Kommunikationsnetzwerk eine gemeinsame Zeitbasis, die sogenannte globale Zeit. Für die Synchronisation von lokalen Uhren der Knoten werden Synchronisationsnachrichten im statischen Teil des Zyklus übertragen, wobei mit Hilfe eines speziellen Algorithmus entsprechend der FlexRay-Spezifikation die lokalen Uhrzeiten der Teilnehmer so korrigiert werden, dass alle lokalen Uhren zu einer globalen Uhr synchron laufen.

Ein FlexRay-Teilnehmer oder FlexRay-Knoten enthält einen Prozessor, einen Kommunikationscontroller sowie, falls eine Busüberwachung realisiert ist, einen sogenannten Bus Guardian. Dabei liefert und verarbeitet der Prozessor die Daten, die über den Kommunikationscontroller empfangen oder übertragen werden. Außerdem umfasst einen FlexRay-Teilnehmer einen Bustreiber für den Zugang auf die physikalische Schicht. Für die Kommunikation in einem FlexRay-Netzwerk können Botschaften bzw. Nachrichten mit zum Beispiel bis zu 254 Datenbytes konfiguriert werden.

Derzeit ist es nicht möglich, in einem deterministischen Kommunikationssystem in den Botschaftsrahmen übertragene Botschaften bzw. Nutzdaten der Botschaften für definierte Knoten des Kommunikationssystems beliebig zu manipulieren. Eine Manipulation von Botschaften bzw. von darin enthaltenen Nutzdaten kann beispielsweise im Zusammenhang mit dem Entwurf, der Auslegung und einem Probebetrieb eines Kommunikationssystems sinnvoll sein. Dabei kann durch die Manipulation von Botschaften bzw. der darin enthaltenen Nutzdaten für bestimmte Knoten eines Kommunikationssystems ermittelt bzw. überprüft werden, wie der Knoten bzw. das Kommunikationssystem auf die Manipulation reagiert und/oder ob der Knoten bzw. das Kommunikätionssystem in der erwarteten Weise reagiert.

Derzeit findet eine Manipulation der in einem deterministischen Kommunikationssystem übertragenen Botschaften lediglich auf Bit-Ebene statt. Diese Manipulationen sind als Stress-Tests für das Kommunikationssystem ausgelegt. Dabei werden jedoch nicht die eigentlichen Nutzdaten, sondern lediglich bestimmte Bits im sogenannten Header oder im sogenannten Trailer eines Botschaftsrahmens verändert. Eine weitergehende Manipulation von übertragenen Botschaften bzw. von in den Botschaften enthaltenen Nutzdaten wird derzeit nicht praktiziert und kann derzeit auch nicht realisiert werden. Eine Manipulation der Nutzdaten in einem Botschaftsrahmen wäre allenfalls mit Änderungen an der Hardware und/oder Software der Knoten möglich. Durch eine solche Manipulation an den Knoten zu Testzwecken würde jedoch das getestete Kommunikationssystem nicht mehr dem in der Praxis letzten Endes eingesetzten Kommunikationssystem (ohne Änderungen an den Knoten) entsprechen und das Ergebnis des Tests wäre nicht aussagekräftig für den eigentlichen Praxiseinsatz des Kommunikationssystems.

Dokument GB 2417865 zeigt eine Vorrichtung, ein Kommunikationssystem und ein Verfahren wie in den Präambeln der Ansprüche 1, 9 und 12.

### Offenbarung der Erfindung

Ausgehend von dem beschriebenen Stand der Technik liegt der vorliegenden Erfindung die Aufgabe zugrunde, auf eine möglichst einfache Weise eine Manipulation von Botschaften bzw. von darin enthaltenen Nutzdaten in einem deterministischen Kommunikationssystem zu ermöglichen, ohne dass dafür eine Änderung an der Hardware und/oder Software an irgendeinem der Knoten des Kommunikationssystems erforderlich wäre.

Zur Lösung dieser Aufgabe wird ausgehend von dem bekannten Stand der Technik eine Vorrichtung zur Manipulation von Kommunikations-Botschaften in einem Kommunikationssystem mit den Merkmalen des Anspruchs 1, ein Kommunikationssystem mit den Merkmalen des Anspruchs 9 und ein Verfahren mit den Merkmalen des Anspruchs 12 vorgeschlagen. Insbesondere ist eine Vorrichtung als Teil eines Kommunikationssystems vorgeschlagen, das einen Datenbus und mehrere daran angeschlossene Knoten aufweist. In dem Kommunikationssystem werden Botschaften in Botschaftsrahmen zu fest vorgegebenen Kommunikationszyklen übertragen. Die zu manipulierenden Botschaften sind für mindestens einen Knoten des Kommunikationssystems bestimmt. Die Vorrichtung ist in dem Datenbus zwischen dem mindestens einen Knoten, für den die zu manipulierenden Botschaften bestimmt sind, und den übrigen Knoten des Kommunikationssystems angeschlossen. Die Vorrichtung weist Mittel zum Abfangen der für den mindestens einen Knoten bestimmten Botschaften vor Erreichen des mindestens einen Knotens, Mittel zur Manipulation der abgefangenen Botschaften und Mittel zum Senden der manipulierten Botschaften an den mindestens einen Knoten auf.

Gemäß der vorliegenden Erfindung werden also in bestimmten Botschaftsrahmen, in denen Botschaften für mindestens einen definierten Knoten des Kommunikationssystems, der manipulierte Botschaften erhalten soll, übertragen werden, nicht die ursprünglichen Original-Botschaften übertragen, sondern manipulierte Botschaften. Die Manipulation der Botschaften erfolgt durch eine in dem Datenbus angeordnete Vorrichtung, welche die übertragenen Original-Botschaften vor Erreichen des Knotens, für den sie bestimmt sind, abfängt, und manipuliert und die manipulierten Botschaften dann an den Knoten, für den die Original-Botschaften ursprünglich bestimmt waren, weiterleitet. Auf diese Weise ist eine Manipulation von Botschaften bzw. der darin enthaltenen Nutzdaten auf einfache Weise möglich, ohne dass es einer Änderung an der Hardware und/oder Software an irgendeinem der Knoten des Kornmunikationssystems bedarf. Die erfindungsgemäße Vorrichtung wird zu Testzwecken einfach an der gewünschten Stelle in den Datenbus eingebracht und später für den Serienbetrieb aus dem Datenbus wieder entfernt. Ansonsten findet keine Änderung an dem Kommunikationssystem statt. Das ist die Voraussetzung dafür, dass die im Testbetrieb des Kommunikationssystems gewonnenen Erkenntnisse auch wirklich auf das tatsächlich realisierte Kommunikationssystem übertragbar und für den praktischen Einsatz aussagekräftig sind.

Während einer Freizeit (sogenannte Channel Idle Time) werden zwischen den Botschaftsrahmen geeignete Schaltelemente der Vorrichtung derart umgeschaltet, dass in dem nachfolgenden Botschaftsrahmen nicht die Original-Botschaft zu den Testknoten übertragen wird, sondern die manipulierte Botschaft. Falls die manipulierten Daten absolute/ konstante Werte annehmen, gibt es zeitlich bezüglich der Zuordnung zu den Zeitschlitzen keine Einschränkung, d.h. die manipulierte Botschaft kann noch in dem gleichen Zeitschlitz übertragen werden, wie die Original-Botschaft übertragen worden wäre. Allerdings gilt, wenn sich zeitlich ändernde Signale manipuliert werden sollen, dass die manipulierten Werte aus den Originalwerten der entsprechenden vorangegangenen Botschaft, d.h. aus der entsprechenden Botschaft des vorangegangenen Zeitschlitzes, berechnet werden müssen. Der Grund dafür ist, dass die aktuellen Signalwerte von der Vorrichtung erst in dem Zeitschlitz eingelesen werden, in dem die manipulierten Signale von der Vorrichtung an den oder die Testknoten gesendet werden. Die manipulierten Botschaften können an dem oder den Testknoten somit erst mit einer gewissen Verzögerung gegenüber den eigentlichen Original-Botschaften empfangen werden. Die Verzögerung entspricht der Signal-Wiederholrate (Wiederholrate der Botschaften), insbesondere einem oder mehreren Kommunikationszyklen. Diese Verzögerung ist aber so lange ohne Einfluss auf ein ordnungsgemäßes Funktionieren des Kommunikationssystems, wie die Signal-Wiederholrate gegenüber der interessierenden Signaländerungsgeschwindigkeit groß genug ist. Für den Großteil der mechanischen Systeme bedeutet dies keine Einschränkung, weil diese eine solche Trägheit aufweisen, dass die Wiederholrate der Botschaften in aller Regel gegenüber der Signaländerungsgeschwindigkeit groß genug ist.

### Kurze Beschreibung der Zeichnungen

Die vorliegende Erfindung wird nachfolgend anhand der Figuren näher erläutert. Es zeigen:
- Figur 1: ein erfindungsgemäßes Kommunikationssystem mit der erfindungsgemäßen Vorrichtung gemäß einer ersten bevorzugten Ausführungsform;
- Figur 2: einen Schaltplan des Kommunikationssystems aus Figur 1;
- Figur 3: ein erfindungsgemäßes Kommunikationssystem mit einer erfindungsgemäßen Vorrichtung gemäß einer zweiten bevorzugten Ausführungsform;
- Figur 4: einen Schaltplan des Kommunikationssystems aus Figur 3;
- Figur 5: ein erfindungsgemäßes Kommunikationssystem mit einer erfindungsgemäßen Vorrichtung gemäß einer dritten bevorzugten Ausführungsform; und
- Figur 6: einen beispielhaften Verlauf der Kommunikationszyklen in den Kommunikationssystemen gemäß der Figuren 1, 3 oder 5.

### Ausführungsform(en) der Erfindung

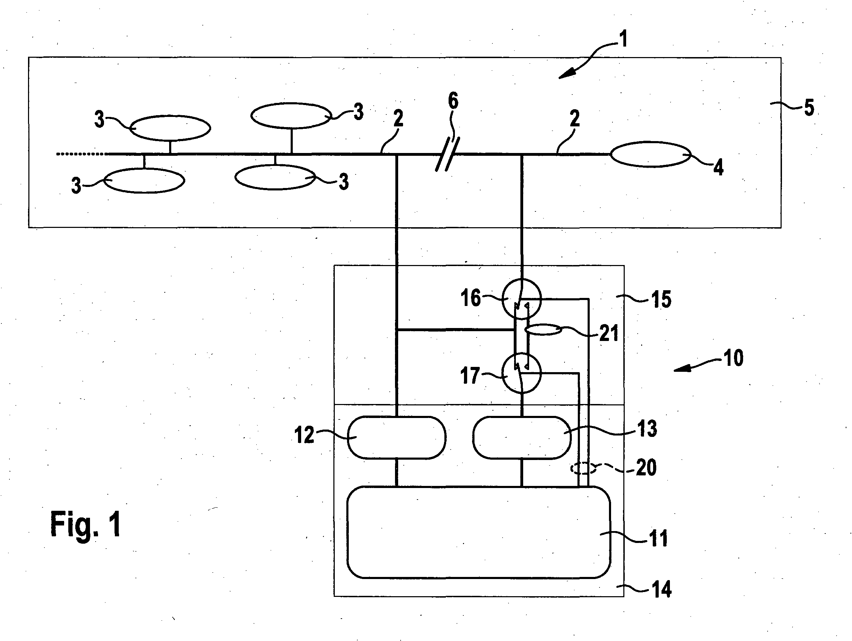

In Figur 1 ist ein erfindungsgemäßes Kommunikationssystem, das in dem vorliegenden Ausführungsbeispiel als ein FlexRay-Kommunikationssystem ausgebildet ist, in seiner Gesamtheit mit dem Bezugszeichen 1 bezeichnet. Im Weiteren wird die vorliegende Erfindung anhand eines FlexRay-Kommunikationssystems näher erläutert, wobei dies nur insofern als einschränkend zu betrachten ist, als dass Eigenschaften des Kommunikationssystems Voraussetzung für die vorliegende Erfindung sind. Falls diese Voraussetzungen auch in einem anderen Kommunikationssystem gegeben sind, ist die vorliegende Erfindung auch auf ein solches Kommunikationssystem anwendbar. Damit ist die vorliegende Erfindung allgemein bei Bussystemen im Kommunikationsbereich einsetzbar, insbesondere bei solchen Kommunikationssystemen, bei denen die zu übertragenden Informationen in Botschaftsrahmen deterministisch (zu vorgegebenen Zeitpunkten) über das Bussystem übertragen werden.

Das Kommunikationssystem 1 umfasst einen Datenbus 2 und mehrere daran angeschlossene Kommunikationsteilnehmer 3, 4, die auch als Knoten bezeichnet werden. Der Datenbus 2 umfasst zwei Kanäle ChA, ChB und für jeden der Kanäle zwei Leitungen BP (Bus-Plus), BM (Bus-Minus). Der Datenbus 2 und die Knoten 3, 4 sind in dem beschriebenen Ausführungsbeispiel alle in einem Kraftfahrzeug 5 angeordnet. Selbstverständlich können der Datenbus 2 und die Knoten 3, 4 auch in einer Anordnung aus dem Werkzeugbereich, bspw. in einer Werkzeugmaschine, oder aus der Automatisierungstechnik angeordnet sein. Bei den Teilnehmern 3, 4 handelt es sich um Steuergeräte zur Steuerung und/oder Regelung bestimmter Funktionen des Kraftfahrzeugs 5. Dabei kann es sich um Steuergeräte für Motor oder Getriebe, für ein Antiblockiersystem, eine Antischlupfregelung oder ein Fahrdynamiksystem, oder um ein Steuergerät zur Realisierung einer beliebigen Komfortfunktion (Sitzverstellung, Klimatisierung des Innenraums, etc.) in dem Fahrzeug handeln. Die Steuergeräte 3, 4 tauschen untereinander Informationen über den FlexRay-Datenbus 2 aus. Die Informationen werden in dem FlexRay-Kommunikationssystem 1 in Botschaftsrahmen zu vorgegebenen Kommunikationszyklen übertragen. Das FlexRay-Protokoll arbeitet nach dem Prinzip des Time Division Multiple Access (TDMA), wobei den Knoten 3, 4 bzw. den übertragenden Botschaften feste Zeitschlitze in den Botschaftsrahmen zugewiesen sind, in denen sie einen exklusiven Zugriff auf den Datenbus 2 haben. Die Zeitschlitze wiederholen sich dabei in einem festgelegten Zyklus, der üblicherweise dem Kommunikationszyklus entspricht. Es ist aber auch denkbar, dass der Wiederholzyklus der Zeitschlitze zwei, drei oder noch mehr Kommunikationszyklen entspricht. In den dazwischen liegenden Kommunikationszyklen kann in dem entsprechenden Botschaftsrahmen eine andere Botschaft bzw. die Botschaft eines anderen Knotens 3, 4 übertragen werden. Dies wird auch als ein Multiplexbetrieb des Kommunikationssystems 1 bezeichnet. Somit kann der Zeitpunkt, zu dem eine Botschaft über den Datenbus 2 übertragen wird, exakt vorausgesagt werden, der Buszugriff erfolgt also deterministisch.

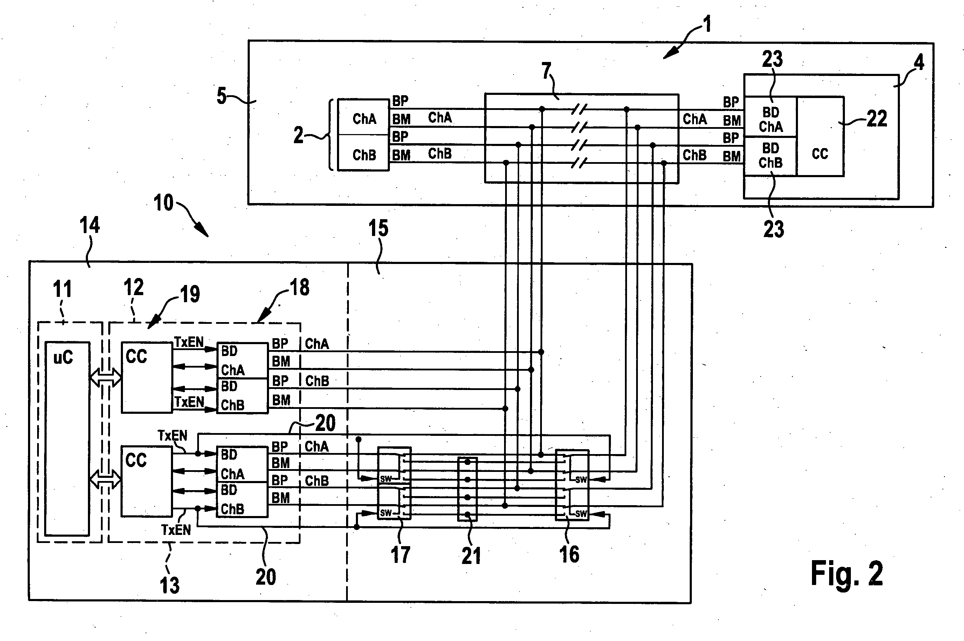

Nach dem Entwurf und dem Auslegen eines neuen Kommunikationssystems 1 muss dieses zunächst auf seine Funktionsfähigkeit in unterschiedlichen Betriebszuständen getestet werden. Dabei werden einige oder alle der Knoten 3, 4 nacheinander entweder einzeln oder in Gruppen mit gezielt manipulierten Botschaften beaufschlagt. Die Manipulation der Botschaften umfasst eine beliebige Änderung insbesondere der Nutzdaten der Botschaften, beispielsweise Änderungen von Statuswerten, Checksummenwerten, Offsetwerten, Offset-Rampen, Empfindlichkeitswerten, Skalierungswerten, etc. Durch die Manipulation der Botschaften bzw. der darin enthaltenen Nutzdaten können verschiedene Betriebszustände der Knoten 3, 4, des Datenbusses 2 und/oder des gesamten Kommunikationssystems 1 zu Testzwecken simuliert werden. In dem vorliegenden Ausführungsbeispiel werden die Knoten 3 ganz normal betrieben, und lediglich der Knoten 4 wird getestet. Der Knoten 4 wird deshalb auch als Device Under Test (DUT) bezeichnet. Die Einzelheiten des DUT 4 sind in Fig. 2 dargestellt. Demnach umfasst das DUT 4 einen Kommunikationscontroller (CC) 22, sowie für jeden Kanal ChA, ChB des Datenbusses 2 einen Bustreiber (BD) 23.

Damit der zu testende Knoten 4 auf einfache Weise mit manipulierten Botschaften beaufschlagt werden kann, insbesondere ohne dass es einer Änderung und/oder Erweiterung der Hardware und/oder der Software des Knoten 4 bzw. anderer Knoten 3 des Kommunikationssystems 1 bedarf, wird erfindungsgemäß der Einsatz einer gesonderten Vorrichtung vorgeschlagen, die in Figur 1 in ihrer Gesamtheit mit dem Bezugszeichen 10 bezeichnet ist. Die Vorrichtung 10 ist derart an einer Stelle 6, wo der Datenbus 2 unterbrochen wurde, in den Datenbus 2 eingebracht, dass sie die normal betriebenen Knoten 3 von dem zu testenden Knoten 4 trennt. Zum Auftrennen des Datenbusses 2 zwischen dem zu manipulierende FlexRay-Cluster 4 (umfasst einen oder mehrere zu testende Knoten) und dem restlichen FlexRay-Bus 2, 3 kann beispielsweise eine Zwischenbox oder Auskoppelbox 7 eingesetzt werden. Über diese Box 7 kann dann auch die Manipulations-Vorrichtung 10 mit dem unterbrochenen Datenbus 2 verbunden werden.

Als Basis für die Vorrichtung 10 kann ein Gerät verwendet werden, das eine Gateway-Funktion FlexRay/FlexRay bietet und programmierbar ist. Zu diesem Zweck verfügt die Vorrichtung 10 über einen programmierbaren Gateway 14. Der Gateway 14 weist einen Gateway-Controller 11 sowie zwei getrennte Knoten 12, 13, in dem vorliegenden Ausführungsbeispiel zwei getrennte FlexRay-Knoten, auf. Der Gateway-Controller 11 ist über die zwei FlexRay-Schnittstellen 12, 13 zu beiden Seiten der Trennstelle 6 an den Datenbus 2 angeschlossen. Die Knoten 12, 13 der Vorrichtung 10 können über einen Prozessor oder über mehrere miteinander kommunizierende Prozessoren per Software bedient werden. Möglich ist auch die Realisierung der Gateway-Funktionen mittels eines Personal Computers (PC) oder eines sog. Embedded Controllers, der über geeignete Schnittstellen zu dem Kommunikationssystem 1 verfügt, so dass mindestens zwei unabhängige Knoten des Kommunikationssystems 1 zur Verfügung stehen.

Des Weiteren verfügt die erfindungsgemäße Manipulations-Vorrichtung 10 über eine Zusatzhardware 15, die in dem vorliegenden Ausführungsbeispiel zwei schnelle analogMultiplexer pro FlexRay-Leitung BP, BM umfasst. Die Verschaltung der analogMultiplexer 16, 17 kann im Einzelnen Figur 2 entnommen werden. Dort sind sowohl beide Kanäle ChA, ChB als auch beide Leitungen BP, BM pro Kanal des Kommunikationssystems 1 dargestellt. Die Multiplexer 16, 17 müssen schnell genug sein, damit sie in der Freizeit (sogenannte Channel-Idle-Time) zwischen zwei Botschaftsrahmen vor bzw. nach dem entsprechenden Botschaftsrahmen umschalten können, ohne den Datenbus 2 zu stören. Anhand der Fig. 2 ist auch zu erkennen, dass die beiden FlexRay-Knoten 12, 13 des programmierbaren Gateways 14 der Vorrichtung 10 jeweils einen Kommunikationscontroller (CC) 19 und einen Bustreiber (BD) 18 für jeden Kanal ChA, ChB aufweisen. Wie des weiteren Fig. 2 im Einzelnen entnommen werden kann, umfasst jeder der Schalter 16, 17 zwei analoge Multiplexer (2 x 2 : 1). Der Schalter 16 in dem Ausführungsbeispiel aus den Figuren 1 und 2 dient dazu zu verhindern, dass für den Fall dass keine Manipulation der Botschaften stattfindet, d.h. die Original-Botschaften werden direkt durch die Vorrichtung 10 hindurch geschleift, ein Terminierungs-Netzwerk 21 das restliche FlexRay-Netzwerk 1 nicht belastet. Das Terminierungs-Netzwerk 21 ist abhängig von der Netztopologie, in der die Manipulations-Vorrichtung 10 zwischen geschaltet wird. Deshalb empfiehlt es sich, das Zuschalten oder Abschalten der Terminierung 21 unabhängig vom Umschalten der Multiplexer 16, 17 beispielsweise per Software zu steuern. Außerdem muss das Terminierungs-Netzwerk 21 derart "vorgespannt" werden, dass der physikalische Datenbus 2 so wenig wie möglich gestört wird. Dazu bedarf es evtl. noch einer zusätzlichen Beschaltung des Haupt-FlexRay-Clusters 2, 3.

Die Multiplexer 16, 17 müssen genau dann aktiviert bzw. deaktiviert werden, wenn auch der jeweilige Bustreiber (BD) 18 für den entsprechenden Zeitschlitz zum Senden der manipulierten Botschaft aktiviert bzw. deaktiviert wird. Das entsprechende Steuersignal für die Multiplexer 16, 17 ist in der Hardware üblicherweise vorhanden, falls nicht muss es mittels (Hardware-) Logik erzeugt werden. Solange aber der FlexRay-Kommunikationscontroller (CC) 19 und der FlexRay-Bustreiber18 in getrennten Bausteinen untergebracht sind, lässt sich dieses Steuersignal in aller Regel zwischen Controller 19 und Treiber 18 direkt abgreifen. In dem dargestellten Ausführungsbeispiel wird als Steuersignal für die Multiplexer 16, 17 das Signal TxEN abgegriffen, das von dem Kommunikationscontroller 19 des sendenden Knotens 13 der Vorrichtung 10 an den entsprechenden Bustreiber 18 für die beiden Kanäle ChA, ChB übermittelt wird. Das Steuersignal TxEN wird über eine Leitung 20 zu entsprechenden Schalteingängen SW der Schalter 16, 17 geführt.

Falls das Kommunikationssystem 1 bzw. das entsprechende Kommunikationsprotokoll eine Busüberwachung, einen sogenannten Bus Guardian BG, in den Knoten 12, 13 (und auch in den Knoten 3, 4) vorsehen, müsste das Steuersignal zum Umschalten der Schaltelemente 16, 17 derart generiert werden, dass das Senden der manipulierten Botschaften bzw. der Original-Botschaften (Botschaften werden durch die Vorrichtung 10 hindurch geschleift) nicht in Konflikt mit dem Bus Guardian tritt.

Das beschriebene Prinzip der selektiven Umschaltung (Aktivierung/Deaktivierung der Vorrichtung 10) zu Manipulationszwecken lässt sich durch den Einsatz mehrerer Multiplexer/Schalter 16, 17 bzw. sogenannter Crosspoint-Switches dahingehend erweitern, dass Manipulationen der Botschaften bzw. des Inhalts der Botschaften in beide Richtungen möglich sind. Dadurch kann eine besonders umfangreiche, flexibler und realitätsnaher Testbetrieb des Systems 1 durchgeführt werden.

In dem programmierbaren Gateway 14 kann als Software jedes Computerprogramm verwendet werden, das die Schnittstellen des Kommunikationssystems 1, in dem beschriebenen Ausführungsbeispiel die FlexRay-Schnittstellen 12, 13, unterstützt und entsprechend programmierbar ist. Das kann zum Einen selbst geschriebene proprietäre Software sein. Es kann aber auch am Markt frei erhältliche Standardsoftware sein, wie beispielsweise CANalyzer oder CANoe von Vector, Informatik GmbH, Ingersheimer Straße 24, 70499 Stuttgart oder entsprechende Software von anderen Anbietern, wie beispielsweise DeComSys sein. Besonders bevorzugt wird Software benutzt, welche Fibex-Dateien als Input nutzen kann. Das Field Bus Exchange Format (FIBEX) bietet eine standardisierte Beschreibung eines Netzwerks. In einer Fibex-Datei sind insbesondere Informationen über die Netzwerk-Topologie sowie über das zeitliche Verhalten bei der Informationsübertragung in dem Netzwerk enthalten. Die Fibex-Datei umfasst insbesondere Informationen darüber, welcher Knoten in welchem Zeitschlitz mit welchen anderen Knoten kommuniziert, die Zyklusdauer, Setup-Informationen für die Kommunikationscontroller, physikalische Einheiten der übertragenen Daten, etc. Die Fibex-Datei umfasst auch Informationen darüber, welcher der Knoten wann Synchronisationsrahmen (sog. Sync-Frames) sendet. Die Fibex-Datei liegt in der Regel im XML (Extensible Markup Language)-Format vor und kann deshalb besonders leicht verarbeitet und editiert werden. XML ist eine Metasprache und ein Quasi-Standard zur Erstellung strukturierter Dokumente im World Wide Web oder in Intranets.

Zur Realisierung der vorliegenden Erfindung muss die Fibex-Datei nicht modifiziert werden. Bei dem in den Figuren 1 und 2 dargestellten Ausführungsbeispiel ist die Fibex-Datei jedoch so modifiziert, dass der eine FlexRay-Knoten 12 der Vorrichtung 10 nur liest (Monitoring-Funktion) und der andere FlexRay-Knoten 13 der Vorrichtung 10 den manipulierten Botschaftsrahmen bzw. die manipulierte Botschaft oder die darin enthaltenen manipulierten Daten in dem Zeitschlitz sendet, in dem der zu manipulierende Original-Botschaftsrahmen gesendet würde. Durch das Umschalten der Multiplexer 16, 17, die ohne weitere Logik gleichzeitig mit dem Freischalten der Bustreiber 18 umgeschaltet werden können, wird dann anstelle der Original-Botschaft die manipulierte Botschaft zu dem zu testenden Knoten 4 gesendet. Alternativ ist es ohne Manipulation der Fibex-Datei auch möglich, die beiden FlexRay-Knoten 12, 13 der Vorrichtung 10 aufgrund der Informationen aus der Fibex-Datei derart zu initialisieren, dass sie ihre spezielle Aufgabe erfüllen können. Das bedeutet, dass der Knoten 12 so initialisiert wird, dass er nur liest und die kompletten Botschaften der für die Manipulation wichtigen Botschaftsrahmen zwischenspeichert (Original-Botschaftsrahmen). Auf diese abgespeicherten Botschaften bzw. den darin enthaltenen Dateninhalt, vorzugsweise den Nutzdateninhalt, greifen dann die Software-Routinen zu, die diese Daten manipulieren und wieder zu Botschaften, den manipulierten Botschaften, zusammensetzen.

Mit diesen manipulierten FexRay-Botschaften wird der Knoten 13 bedatet, damit dieser dann anstelle der Original-Botschaftsrahmen bzw. der Original-Botschaften die manipulierten Rahmen bzw. Botschaften zu dem zu testenden Knoten 4 schickt. Der FlexRay-Knoten 13 muss derart initialisiert werden, dass er nur dann als Sender aktiv wird, wenn die Zeitschlitze der Original-Botschaftsrahmen an der Reihe sind, die es zu manipulieren gilt. Der Knoten 13 ist also immer an der Reihe mit Senden, wenn auch die Original-Sendeknoten 3 der für die Manipulation relevanten Botschaftsrahmen mit dem Senden dieser Rahmen an der Reihe sind. Die Information wann welcher Knoten 3 mit dem Senden an der Reihe ist, kann der Fibex-Datei entnommen werden.

Dadurch, dass außer in diesen Zeitschlitzen, zu denen die manipulierten Botschaften übermittelt werden, alle beteiligten Netzwerkknoten 3, 4 miteinander verbunden sind, wird die dauernde Synchronisierung des Netzwerks bzw. der lokalen Uhren der einzelnen Komponenten 3, 4 auf die globale Zeit nicht gefährdet. Es ist sogar möglich, dass die Manipulations-Vorrichtung 10 durch die Initialisierung die Aufgabe des die Original-Botschaft sendenden Knotens 3 übernimmt bzw. übernehmen kann, so dass der Kommunikationscontroller CC 19 des sendenden Knotens 13 den Botschaftsrahmen dann in dem entsprechenden Zeitschlitz als Synchronisationsrahmen sendet. Das wird allein durch die Software entschieden, der alle diesbezüglichen Informationen durch die Fibex-Datei vorliegen.

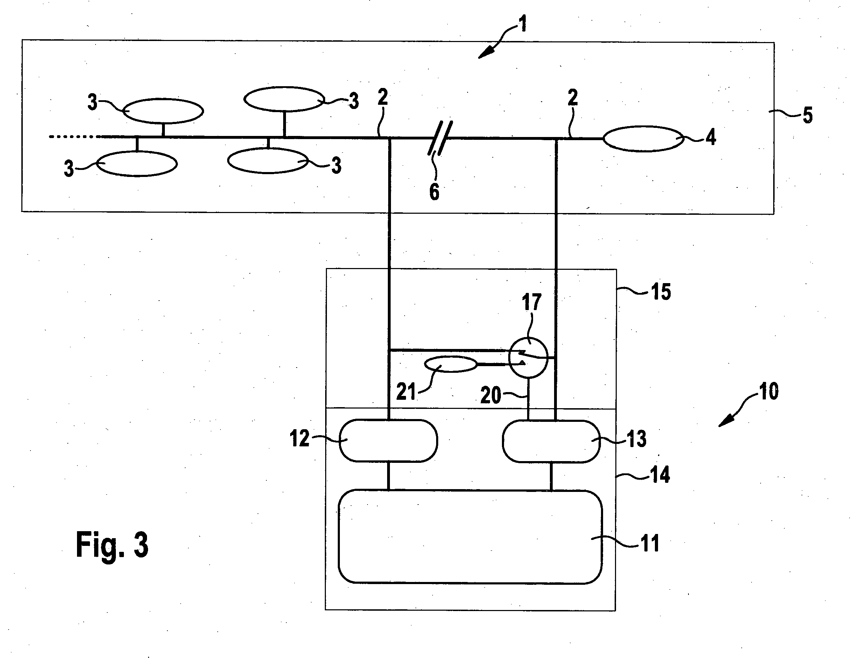

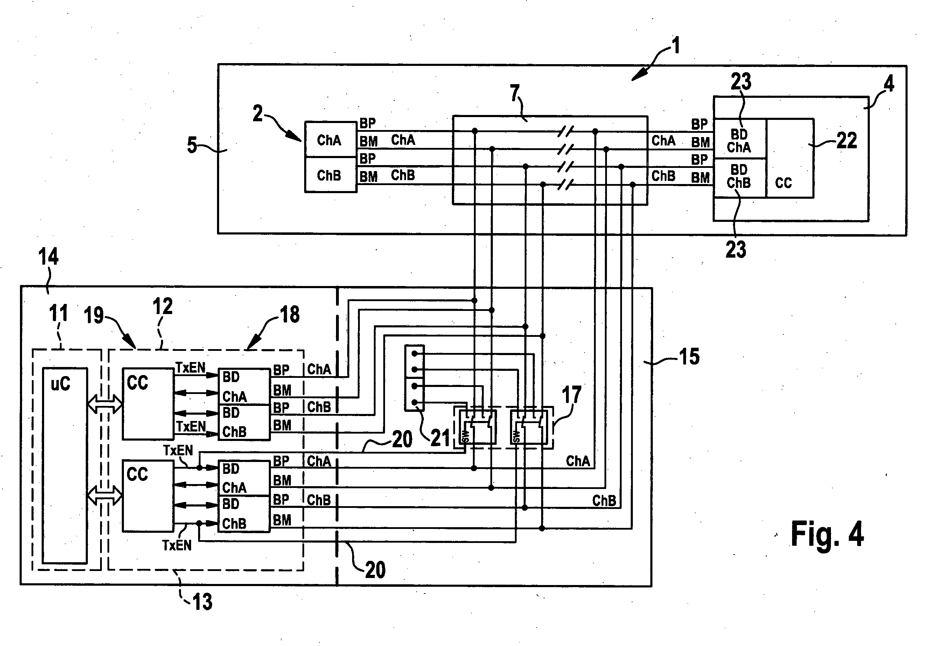

Ein in den Figuren 3 und 4 dargestelltes weiteres Ausführungsbeispiel unterscheidet sich von dem ersten Ausführungsbeispiel aus den Figuren 1 und 2 insbesondere dadurch, dass nur noch ein Multiplexer-Kanal pro FlexRay-Leitung benötigt wird. Deshalb ist in der erfindungsgemäßen Manipulations-Vorrichtung 10 in Figur 3 auch nur noch ein Schalter 17 eingezeichnet; auf den Schalter 16 wurde verzichtet. Dementsprechend zeigt die detaillierte Schaltung in Figur 4 auch nur noch den einen Schalter 17, der zwei analoge Multiplexer, einen für jeden Kanal ChA, ChB, umfasst. Die einzelnen Multiplexer des Schalters 17 sind gemäß der Schaltung aus Figur 4 verschaltet. Das Signal zur Ansteuerung der Multiplexer ist identisch mit dem Signal TxEN (Transmit Enable), das von dem Kommunikationscontroller 19 an die Bustreiber 18 des sendenden Knotens 13 gesendet wird. Das Ansteuersignal TxEN für die Multiplexer des Schalters 17 liegt über die Leitungen 20 an dem Schaltsignaleingang SW der Multiplexer an. Die Multiplexer des Schalters 17 werden also ohne weitere Logik gleichzeitig mit dem Freischalten der Bustreiber 18 umgeschaltet, so dass dann anstelle der Original-Botschaften die manipulierten Botschaften zu dem zu testenden Gerät 4 gesendet werden.

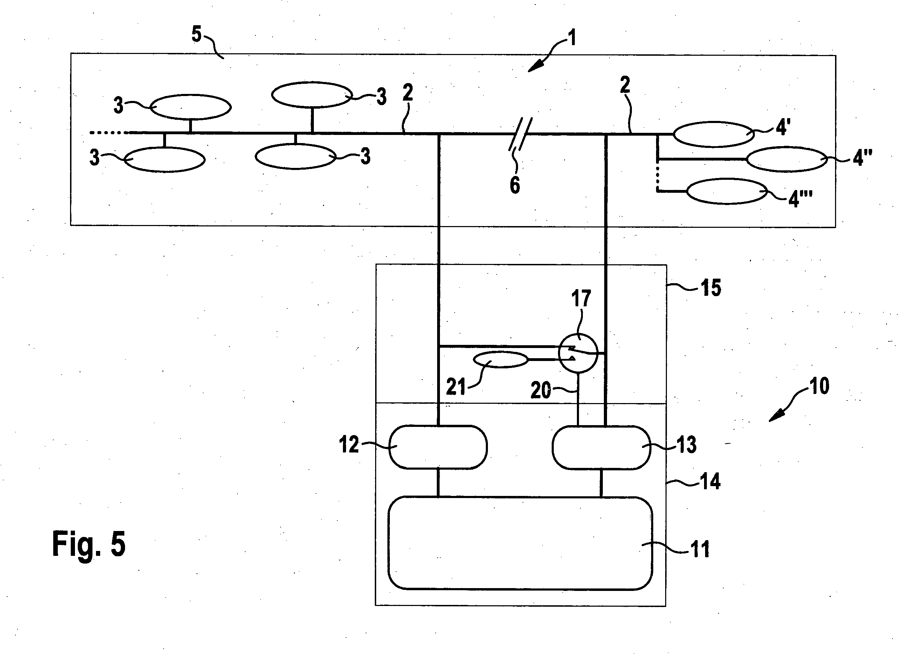

In Figur 5 ist ein weiteres Ausführungsbeispiel der vorliegenden Erfindung dargestellt. Der wesentliche Unterschied zu den Ausführungsbeispielen aus den Figuren 1 bis 4 besteht darin, dass die erfindungsgemäße Manipulations-Vorrichtung 10 nicht nur zum Beaufschlagen eines einzigen zu testenden Knotens 4 mit manipulierten Botschaften, sondern auch zum Beaufschlagen mehrerer zu testender Knoten 4', 4", 4"' eines sogenannten Sub-Clusters eingesetzt werden kann. Die Informationen, für welche Knoten 4', 4", 4"' bestimmte Botschaften von der Vorrichtung 10 abgefangen und manipuliert werden sollen, müssen in der Manipulations-Vorrichtung 10 vorhanden sein. Manipulierte Botschaften für den Knoten 4' werden in dem dafür vorgesehenen Zeitschlitz des entsprechenden Kommunikationszyklus von dem Knoten 13 der Vorrichtung 10 gesendet. Für die anderen zu testenden Knoten 4" und 4'" bestimmte manipulierte Botschaften werden zu dem entsprechenden, den Original-Botschaften bzw. den zu testenden Knoten 4", 4"' zugeordneten Zeitschlitzen und Kommunikationszyklen an diese übertragen. Aus der Vielzahl der auf dem Datenbus 2 übertragenen Botschaftsrahmen bzw. Botschaften kann die erfindungsgemäße Manipulations-Vorrichtung 10 also gezielt diejenigen Botschaften herausgreifen, die für einen der Knoten 4', 4", 4"' des Sub-Clusters bestimmt sind, die abgefangenen Botschaften bzw. deren Inhalt gemäß Vorgabe manipulieren und die manipulierte Botschaften an den entsprechenden zu testenden Knoten 4', 4", 4'" des Sub-Clusters senden.

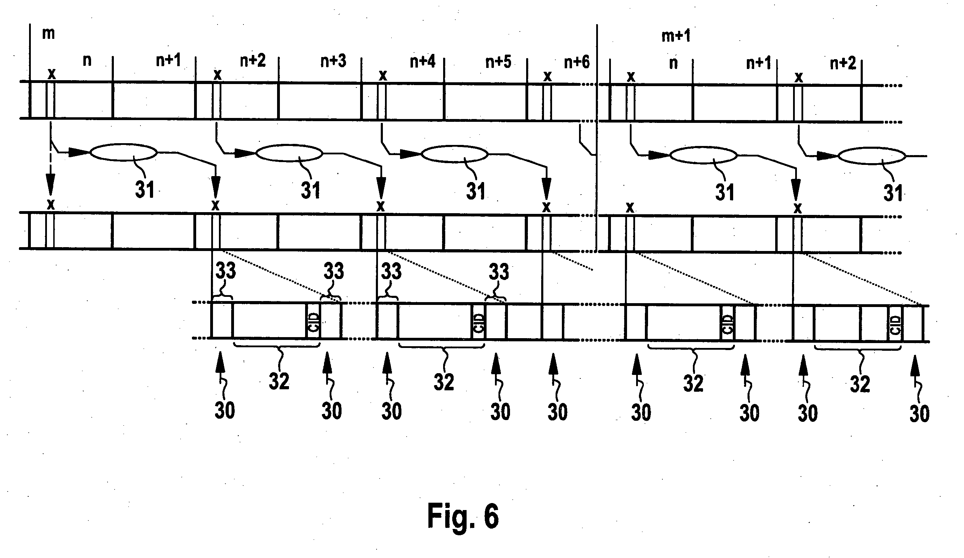

Der Ablauf des erfindungsgemäßen Verfahrens wird im Folgenden anhand der Figur 6 näher erläutert. Figur 6 zeigt mehrere aufeinander folgende Wiederholzyklen m, m+1 in dem FlexRay-Kommunikationssystem 1. Jeder Wiederholzyklus m, m+1 ist in mehrere Kommunikationszyklen n, n+1, ... unterteilt. In jedem Zyklus n, n+1, ... wird ein Zykluszähler (Cycle Counter) um 1 erhöht. Der Cycle Counter läuft vorzugsweise von 0 bis 63, um dann wieder bei 0 zu beginnen. Alternativ kann der Cycle Counter auch von 63 auf 0 heruntergezählt werden, um dann wieder bei 63 zu beginnen. Ein Wiederholzyklus entspricht jeweils einem Durchlauf des Cycle Counters von 0 bis 63 oder von 63 bis 0. Selbstverständlich kann statt des Anfangswerts bzw. Endwerts 63 auch ein beliebig anderer Wert > 0 gewählt werden. Jeder Zyklus n, n+1, ... ist wiederum in mehrere Zeitschlitze unterteilt, von denen in Figur 6 beispielhaft ein Zeitschlitz x eingezeichnet ist. Jeder Zeitschlitz eines Zyklus ist einem bestimmten Knoten 3, 4, des Kommunikationssystems 1 und/oder einer bestimmten Botschaft zugeordnet. In dem in Figur 6 dargestellten Beispiel wird eine Art Multiplexing betrieben, indem der Zeitschlitz x lediglich in jedem zweiten Zyklus n, n+2, n+4, ... enthalten ist. In den dazwischen liegenden Zyklen n+1, n+3, n+5, ... kann der entsprechende Zeitschlitz zur Übertragung einer anderen Botschaft bzw. zur Übertragung von Botschaften von einem anderen Knoten 3, 4 genutzt werden.

Das obere Ablaufdiagramm in Figur 6 zeigt FlexRay-Botschaften des ursprünglichen, unmanipulierten Netzwerks 1. In dem darunter liegenden Ablaufdiagramm sind die FlexRay-Botschaften dargestellt, wie sie bei dem oder den zu testenden Knoten 4 ankommen. Unterhalb des zweiten Ablaufdiagramms ist eine Vergrößerung der Zeitschlitze x dargestellt. Eine grobe Unterteilung der Zeitschlitze x umfasst zunächst eine Chanel-Idle-Zeit 33, gefolgt von dem eigentlichen FlexRay-Botschaftsrahmen (Frame) 32 und einem Bit-Channel-Idle-Delimiter (CID), gefolgt von einer weiteren Channel-Idle-Zeit 33. Der FlexRay-Botschaftsrahmen 32 ist unterteilt Header, Payload (Nutzdaten) und Trailer. Die zu manipulierenden Informationen einer Botschaft umfassen in dem Flexray-Botschaftsrahmen 32 abgelegte Informationen, vorzugsweise Nutzdaten. Durch Pfeile 30 sind in Fig. 6 die Zeitpunkte während der Channel-Idle-Zeiten 33 angedeutet, zu denen der Kommunikationscontroller 19 der Vorrichtung 10 die analogen Multiplexer der Schalter 16, 17 zeitgleich mit der Aktivierung/Deaktivierung des Bustreibers 18 schaltet, d.h. die Manipulation der Botschaften aktiviert bzw. deaktiviert.

Zu Beginn der Kommunikation sind alle Knoten 3, 4 des Kommunikationssystems 1 miteinander verbunden (die Trennstelle 6 ist nicht vorhanden). Dadurch wird die Initialisierung des Kommunikationssystems 1 und die Synchronisierung aller Knoten 3, 4 ganz normal wie bei einem herkömmlichen Kommunikationssystem 1 durchlaufen. Wenn die zu manipulierende Botschaft das erste Mal gesendet wird (Zyklus n im Wiederholungszyklus m), wird diese unverändert an das zu testende Gerät 4 weitergeleitet. Dort liegt also beim ersten Zyklus n die Original-Botschaft an. Das muss die Software der Manipulations-Vorrichtung 10 bzw. die Software des programmierbaren Gateways 14 sicherstellen. Gleichzeitig wird die im Original weitergeleitete Botschaft in der Vorrichtung 10 zwischengespeichert, manipuliert (Funktionsblock 31) und für den nächsten Zyklus n+2, zu dem dieser Zeitschlitz x das nächste Mal wieder dran ist, in den Kommunikationscontroller 19 des sendenden Knotens 13 der Vorrichtung 10 geschrieben. Das bedeutet also, dass zum Zyklus n+2 die in diesem Zyklus übertragene Original-Botschaft von der Vorrichtung 10 abgefangen wird. Statt der abgefangenen Original-Botschaft aus dem Zyklus n+2 wird die manipulierte Botschaft aus dem vorangegangenen Zyklus n, zu dem der Zeitschlitz x das letzte Mal dran war, an den oder die zu testenden Knoten 4; 4', 4", 4"' gesendet. Wenn der Zeitschlitz x der zu manipulierenden Botschaft gemäß Zeitplan (Schedule) mit der Botschaftsübertragung dran ist, steuert der Kommunikationscontroller 19 des sendenden Knotens 13 der Manipulations-Vorrichtung 10 die Bustreiber 18 für eine Sendebotschaft an. Gleichzeitig mit diesem Signal werden die Multiplexer der Schalter 17 und - falls vorhanden - 16 umgeschaltet und dadurch die manipulierte Botschaft in diesem Zeitschlitz x auf den FlexRay-Datenbus 2 zum zu testenden Knoten 4 bzw. den Sub-Cluster 4', 4", 4"' gelegt.

Sobald die Manipulation 31 deaktiviert wird, muss die Software des programmierbaren Gateways 14 das Senden des Botschaftsrahmens für den zu manipulierenden Zeitschlitz x unterbinden. Dadurch werden auch die Multiplexer 16, 17 umgeschaltet, und der Original-Datenrahmen bzw. die Original-Botschaft wird an den Testknoten 4 bzw. das Sub-Cluster 4', 4", 4"' weitergeleitet.

Selbstverständlich muss für die Manipulations-Software des programmierbaren Gateways 14 der erfindungsgemäßen Manipulations-Vorrichtung 10 der Aufbau der Botschaften bekannt sein, damit die zu manipulierenden Werte der Original-Botschaft auch in gewünschter Weise manipuliert und dann die manipulierte Botschaft generiert werden kann. Außerdem müssen durch die Vorrichtung 10, sofern vorhanden, zum Beispiel die Botschaftsnummern inkrementiert und die nötigen Checksummen neu berechnet. Auch diese Informationen müssen ggf. in der manipulierten Botschaft abgelegt werden. Wichtig ist, dass die Manipulations-Vorrichtung 10 für die zu testenden Knoten 4; 4', 4", 4"' unsichtbar für diese bestimmte Botschaften abfängt, in vorgegebener Weise manipuliert und wieder zu einer manipulierten Botschaft zusammensetzt, die der in dem Kommunikationssystem 1 verwendeten Protokollspezifikation entspricht. Für das gesamte Kommunikationssystem 1 muss der Einsatz der erfindungsgemäßen Manipulations-Vorrichtung 10 praktisch unsichtbar sein, jedenfalls dürfen durch die Vorrichtung 10 nicht einfach für die ordnungsgemäße Kommunikation erforderliche Informationen in den Botschaften gelöscht und/oder fehlerhafte Botschaften generiert werden, die zu einem Fehler des Kommunikationssystems 1 führen könnten. Die zu testenden Knoten 4 erhalten die für sie bestimmten Botschaften ganz normal wie bisher auch, allerdings mit einem manipulierten Inhalt und -je nach Wiederholrate des Zeitschlitzes x - um einen oder mehrere Zyklen n, n+1, ... verzögert. Die Verzögerung ist jedoch in aller Regel für den zu testenden Knoten 4 ohne Bedeutung, solange die Wiederholrate des Zeitschlitzes x gegenüber der interessierenden Signal-Änderungsgeschwindigkeit des manipulierten Signals groß genug ist.

## Patentansprüche

1. Vorrichtung (10) zur Manipulation von Kommunikations-Botschaften in einem Kommunikationssystem (1) umfassend einen Datenbus (2) und mehrere daran angeschlossene Knoten (3, 4; 4', 4", 4"'), wobei das Kommunikationssystem (1) Mittel zur Übertragung von Botschaften in Botschaftsrahmen (32) zu fest vorgegebenen Kommunikationszyklen (n, n+1, n+2, ...) aufweist, die zu manipulierenden Botschaften für mindestens einen Knoten (4; 4', 4", 4"') des Kommunikationssystems (1) bestimmt sind und die Vorrichtung (10) in dem Datenbus (2) zwischen dem mindestens einen Knoten (4; 4', 4", 4"'), für den die zu manipulierenden Botschaften bestimmt sind, und den übrigen Knoten (3) des Kommunikationssystems (1) angeordnet ist, wobei die Vorrichtung (10) Mittel (12) zum Abfangen der Botschaften vor Erreichen des mindestens einen Knotens (4; 4', 4", 4"'), Mittel (11) zur Manipulation der abgefangenen Botschaften und Mittel (13) zum Senden der manipulierten Botschaften an den mindestens einen Knoten (4; 4', 4", 4"') aufweist, **dadurch gekennzeichnet, dass** die Vorrichtung (10) gezielt aktivierbar und deaktivierbar ist, wobei sie im deaktivierten Zustand die für den durch die Vorrichtung (10) von dem Datenbus getrennten mindestens einen Knoten (4; 4', 4", 4"') bestimmten Botschaften ohne Manipulation passieren lässt, und dass zwischen den Botschaftsrahmen (32) Freizeiten (33) vorgesehen sind, in denen keine Kommunikations-Botschaften übertragen werden, und dass die Vorrichtung (10) Schaltmittel (16, 17) zur Aktivierung bzw. Deaktivierung der Mittel (11) zur Manipulation der Botschaften während der Freizeiten (33) aufweist.

2. Vorrichtung (10) nach Anspruch 1, **dadurch gekennzeichnet, dass** die Vorrichtung (10) über Informationen betreffend den Aufbau und das zeitliche Verhalten des Kommunikationssystems (1), insbesondere betreffend die Botschaftsübertragung über den Datenbus (2), verfügt, und die Vorrichtung (10) die Aktivierung bzw. Deaktivierung der Mittel (11) zur Manipulation der Botschaften in Abhängigkeit von den Informationen betreffend das Kommunikationssystem (1) veranlasst.

3. Vorrichtung (10) nach Anspruch 2, **dadurch gekennzeichnet, dass** die Informationen betreffend das Kommunikationssystem (1) in Form einer Fibex-Datei vorliegen:

4. Vorrichtung (10) nach einem der Ansprüche 1 bis 3, **dadurch gekennzeichnet, dass** die Vorrichtung (10) zwei Netzwerkknoten (12, 13) umfasst, wobei einer der Knoten (12) ein reiner Leseknoten ist, der die für den mindestens einen durch die Vorrichtung (10) von dem Datenbus (2) getrennten Knoten (4; 4', 4", 4"') bestimmten Botschaften liest und an die Mittel (11) zur Manipulation der Botschaften weiterleitet, und der andere Knoten (13) ein reiner Schreibknoten ist, der die manipulierten Botschaften an den mindestens einen durch die Vorrichtung (10) von dem Datenbus (2) getrennten Knoten (4; 4', 4", 4"') sendet.

5. Vorrichtung (10) nach Anspruch 4, **dadurch gekennzeichnet, dass** der Schreibknoten (13) die manipulierten Botschaften in einem dem Botschaftsrahmen (32) der empfangenen Botschaft entsprechenden Botschaftsrahmen (32) eines nachfolgenden Kommunikationszyklus (n, n+1, n+2, ...) überträgt.

6. Vorrichtung (10) nach Anspruch 5, **dadurch gekennzeichnet, dass** der Schreibknoten (13) eine manipulierte Botschaft in dem dem Botschaftsrahmen (32) der entsprechenden empfangenen Botschaft entsprechenden Botschaftsrahmen (32) eines nachfolgenden Kommunikationszyklus (n+2, n+4, ...) überträgt, zu dem der Botschaftsrahmen (32) der empfangenen Botschaft nach dem Empfang der Botschaft das nächste Mal übertragen wird.

7. Vorrichtung (10) nach einem der Ansprüche 1 bis 6, **dadurch gekennzeichnet, dass** die Vorrichtung (10) Mittel zum Zwischenspeichern von empfangenen Botschaften und/ oder von zu sendenden manipulierten Botschaften aufweist.

8. Vorrichtung (10) nach einem der Ansprüche 1 bis 7, **dadurch gekennzeichnet, dass** die Manipulation der Botschaften eine Manipulation von Nutzdaten, insbesondere eine beliebige Wertänderung von Statuswerten, Checksummen, Offsetwerten, Offsetrampen, Empfindlichkeiten, Skalierungen in den übertragenen Botschaften umfasst.

9. Kommunikationssystem (1) umfassend einen Datenbus (2) und mehrere daran angeschlossene Netzwerkknoten (3, 4; 4', 4", 4"'),
wobei das Kommunikationssystem (1) Mittel zum Übertragen von Kommunikations-Botschaften zwischen den Knoten (3, 4; 4', 4", 4"') über den Datenbus (2) in Botschaftsrahmen (32) zu fest vorgegebenen Kommunikationszyklen (n, n+1, n+2, ...) aufweist,
wobei das Kommunikationssystem (1) eine Vorrichtung (10) umfasst, gemäß Anspruch 1

10. Kommunikationssystem (1) nach Anspruch 9, **dadurch gekennzeichnet, dass** das Kommunikationssystem (1) als ein FlexRay-Kommunikationssystem ausgebildet ist.

11. Kommunikationssystem (1) nach Anspruch 9 oder 10, **dadurch gekennzeichnet, dass** die Vorrichtung (10) nach einem der Ansprüche 2 bis 8 ausgebildet ist.

12. Verfahren zur Manipulation von Kommunikations-Botschaften in einem Kommunikationssystem (1) umfassend einen Datenbus (2) und mehrere daran angeschlossene Knoten (3, 4; 4', 4", 4"'), wobei in dem Kommunikationssystem (1) die Botschaften in Botschaftsrahmen (32) zu fest vorgegebenen Kommunikationszyklen (n, n+1, n+2, ...) übertragen werden, die zu manipulierenden Botschaften für mindestens einen Knoten (4; 4', 4", 4"') des Kommunikationssystems (1) bestimmt sind und die zu manipulierenden Botschaften vor Erreichen des mindestens einen Knotens (4; 4', 4", 4"') von einer Vorrichtung (10) zur Manipulation der Botschaften abgefangen und manipuliert werden und die manipulierten Botschaften an den mindestens einen Knoten (4; 4', 4", 4"') übermittelt werden, **dadurch gekennzeichnet, dass** die Vorrichtung (10) gezielt aktiviert und deaktiviert werden kann, wobei sie im deaktivierten Zustand die für den durch die Vorrichtung (10) von dem Datenbus getrennten mindestens einen Knoten (4; 4', 4", 4"') bestimmten Botschaften ohne Manipulation passieren lässt, und dass zwischen den Botschaftsrahmen (32) Freizeiten (33) vorgesehen sind, in denen keine Kommunikations-Botschaften übertragen werden, und dass die Vorrichtung (10) die Mittel (11) zur Manipulation der Botschaften während der Freizeiten (33) aktiviert bzw. deaktiviert.

## Claims

1. Apparatus (10) for manipulating communication messages in a communication system (1) comprising a data bus (2) and a plurality of nodes (3, 4; 4', 4", 4"') connected thereto, wherein the communication system (1) has means for transmitting messages in message frames (32) for firmly prescribed communication cycles (n, n+1, n+2, etc.), the messages to be manipulated are intended for at least one node (4; 4', 4", 4"') of the communication system (1), and the apparatus (10) is arranged in the data bus (2) between the at least one node (4; 4' , 4" , 4"') for which the messages to be manipulated are intended and the remaining nodes (3) of the communication system (1), wherein the apparatus (10) has means (12) for intercepting the messages before they reach the at least one node (4; 4', 4", 4'''), means (11) for manipulating the intercepted messages and means (13) for sending the manipulated messages to the at least one node (4; 4', 4", 4"'), **characterized in that** the apparatus (10) can be activated and deactivated in a specific manner, wherein, in the deactivated state, it allows the messages that are intended for the at least one node (4; 4', 4", 4"') separated from the data bus by the apparatus (10) to pass without manipulation, and **in that** free times (33) in which no communication messages are transmitted are provided between the message frames (32), and **in that** the apparatus (10) has switching means (16, 17) for activating and deactivating the means (11) for manipulating the messages during the free times (33).

2. Apparatus (10) according to Claim 1, **characterized in that** the apparatus (10) has information relating to the design and the timing response of the communication system (1), particularly relating to the message transmission via the data bus (2), and the apparatus (10) prompts the activation and deactivation of the means (11) for manipulating the messages on the basis of the information relating to the communication system (1).

3. Apparatus (10) according to Claim 2, **characterized in that** the information relating to the communication system (1) is available in the form of a Fibex file.

4. Apparatus (10) according to one of Claims 1 to 3, **characterized in that** the apparatus (10) comprises two network nodes (12, 13), wherein one of the nodes (12) is purely a reading node that reads the messages intended for the at least one node (4; 4', 4", 4"') separated from the data bus (2) by the apparatus (10) and forwards them to the means (11) for manipulating the messages, and the other node (13) is purely a writing node that sends the manipulated messages to the at least one node (4; 4', 4'', 4"') separated from the data bus (2) by the apparatus (10).

5. Apparatus (10) according to Claim 4, **characterized in that** the writing node (13) transmits the manipulated messages in a message frame (32) of a subsequent communication cycle (n, n+1, n+2, etc.) that corresponds to the message frame (32) of the received message.

6. Apparatus (10) according to Claim 5, **characterized in that** the writing node (13) transmits a manipulated message **in that** message frame (32) of a subsequent communication cycle (n+2, n+4, etc.) that corresponds to the message frame (32) of the relevant received message, for which communication cycle the message frame (32) of the received message is transmitted the next time following reception of the message.

7. Apparatus (10) according to one of Claims 1 to 6, **characterized in that** the apparatus (10) has means for buffer-storing received messages and/or manipulated messages that are to be sent.

8. Apparatus (10) according to one of Claims 1 to 7, **characterized in that** the manipulation of the messages comprises manipulation of useful data, particularly any change of value for status values, checksums, offset values, offset ramps, sensitivities, scalings in the transmitted messages.

9. Communication system (1) comprising a data bus (2) and a plurality of network nodes (3, 4; 4', 4", 4"') connected thereto,
wherein the communication system (1) has means for transmitting communication messages between the nodes (3, 4; 4' , 4", 4"') via the data bus (2) in message frames (32) for firmly prescribed communication cycles (n, n+1, n+2, etc.),
wherein the communication system (1) comprises an apparatus (10), according to Claim 1.

10. Communication system (1) according to Claim 9, **characterized in that** the communication system (1) is in the form of a FlexRay communication system.

11. Communication system (1) according to Claim 9 or 10, **characterized in that** the apparatus (10) is in a form according to one of Claims 2 to 8.

12. Method for manipulating communication messages in a communication system (1) comprising a data bus (2) and a plurality of nodes (3, 4; 4', 4'', 4"') connected thereto, wherein the messages in the communication system (1) are transmitted in message frames (32) for firmly prescribed communication cycles (n, n+1, n+2, etc.), the messages to be manipulated are intended for at least one node (4; 4' , 4", 4"') of the communication system (1), and the messages to be manipulated are intercepted and manipulated by an apparatus (10) for manipulating the messages before they reach the at least one node (4; 4', 4", 4"'), and the manipulated messages are transmitted to the at least one node (4; 4', 4", 4"'), **characterized in that** the apparatus (10) can be activated and deactivated in a specific manner, wherein, in the deactivated state, it allows the messages that are intended for the at least one node (4; 4', 4", 4"') separated from the data bus by the apparatus (10) to pass without manipulation, and **in that** free times (33) in which no communication messages are transmitted are provided between the message frames (32), and **in that** the apparatus (10) activates and deactivates the means (11) for manipulating the messages during the free times (33).

## Revendications

1. Dispositif (10) de manipulation de messages de communication dans un système de communication (1) comprenant un bus de données (2) et de multiples noeuds (3, 4 ; 4', 4", 4"') raccordés à celui-ci, dans lequel le système de communication (1) comporte des moyens pour transmettre des messages dans des trames de messages (32) selon des cycles de communication prédéfinis de manière fixe (n, n+1, n+2, ...), les messages à manipuler sont établis pour au moins un noeud (4 ; 4', 4", 4"') du système de communication (1) et le dispositif (10) est disposé dans le bus de données (2) entre l'au moins un noeud (4 ; 4', 4", 4"') pour lequel les messages à manipuler sont établis et les noeuds restants (3) du système de communication (1), dans lequel le dispositif (10) comporte des moyens (12) pour intercepter les messages avant qu'ils atteignent l'au moins un noeud (4 ; 4', 4", 4"'), des moyens (11) de manipulation des messages interceptés et des moyens (13) pour envoyer les messages manipulés à l'au moins un noeud (4 ; 4', 4", 4"'), **caractérisé en ce que** le dispositif (10) peut être activé et désactivé de manière ciblée, dans lequel celui-ci, à l'état désactivé, laisse passer sans manipulation les messages établis pour l'au moins un noeud (4 ; 4', 4", 4"') séparé du bus de données par le dispositif (10), et **en ce qu'**il est prévu entre les trames de messages (32) des temps morts (33) au cours desquels aucun message de communication n'est transmis, et **en ce que** le dispositif (10) comporte des moyens de commutation (16, 17) pour activer ou désactiver les moyens (11) de manipulation des messages pendant les temps morts (33).

2. Dispositif (10) selon la revendication 1, **caractérisé en ce que** le dispositif (10) possède des informations concernant la structure et le comportement temporel du système de communication (1), et concernant notamment la transmission de messages par l'intermédiaire du bus de données (2), et **en ce que** le dispositif (10) ordonne l'activation ou la désactivation des moyens (11) de manipulation des messages en fonction des informations concernant le système de communication (1).

3. Dispositif (10) selon la revendication 2, **caractérisé en ce que** les informations concernant le système de communication (1) sont présentes sous la forme d'un fichier FIBEX.

4. Dispositif (10) selon l'une quelconque des revendications 1 à 3, **caractérisé en ce que** le dispositif (10) comprend deux noeuds de réseau (12, 13), dans lequel l'un des noeuds (12) est un noeud de lecture seule qui lit les messages établis pour l'au moins un noeud (4 ; 4', 4", 4"') séparé du bus de données (2) par le dispositif (10) et les réachemine aux moyens (11) de manipulation des messages, et l'autre noeud (13) est un noeud d'écriture seule qui envoie les messages manipulés à l'au moins un noeud (4 ; 4', 4", 4"') séparé du bus de données (2) par le dispositif (10).

5. Dispositif (10) selon la revendication 4, **caractérisé en ce que** le noeud d'écriture (13) transmet les messages manipulés dans une trame de message (32) correspondant à la trame de message (32) du message reçu d'un cycle de communication suivant (n, n+1, n+2, ...).

6. Dispositif (10) selon la revendication 5, **caractérisé en ce que** le noeud d'écriture (13) transmet un message manipulé dans la trame de message (32) correspondant à la trame de message (32) du message reçu correspondant d'un cycle de communication suivant (n+2, n+4, ...), auquel la trame de message (32) du message reçu est transmise la prochaine fois après la réception du message.

7. Dispositif (10) selon l'une quelconque des revendications 1 à 6, **caractérisé en ce que** le dispositif (10) comporte des moyens de stockage temporaire des messages reçus et/ou des messages manipulés à envoyer.

8. Dispositif (10) selon l'une quelconque des revendications 1 à 7, **caractérisé en ce que** la manipulation des messages comprend une manipulation de données utiles, notamment une modification quelconque de valeurs d'état, de totaux de contrôle, de valeurs de décalage, de rampes de décalage, de sensibilités, d'adaptations d'échelle dans les messages transmis.

9. Système de communication (1) comprenant un bus de données (2) et de multiples noeuds de réseau (3, 4 ; 4', 4", 4"') raccordés à celui-ci, dans lequel le système de communication (1) comporte des moyens pour transmettre des messages de communication entre les noeuds (3, 4 ; 4', 4", 4"') par l'intermédiaire du bus de données (2) dans des trames de messages (32) selon des cycles de communication prédéfinis de manière fixe (n, n+1, n+2, ...), dans lequel le système de communication (1) comprend un dispositif (10) selon la revendication 1.

10. Système de communication (1) selon la revendication 9, **caractérisé en ce que** le système de communication (1) est réalisé sous la forme d'un système de communication Flex Ray.

11. Système de communication (1) selon la revendication 9 ou 10, **caractérisé en ce que** le dispositif (10) est réalisé selon l'une quelconque des revendications 2 à 8.

12. Procédé de manipulation de messages de communication dans un système de communication (1) comprenant un bus de données (2) et de multiples noeuds (3, 4 ; 4', 4", 4"') raccordés à celui-ci, dans lequel, dans le système de communication (1), les messages sont transmis dans des trames de messages (32) selon des cycles de communication prédéfinis de manière fixe (n, n+1, n+2, ...), les messages à manipuler sont établis pour au moins un noeud (4 ; 4', 4", 4"') du système de communication (1) et les messages à manipuler sont interceptés et manipulés par un dispositif (10) de manipulation des messages avant qu'ils atteignent l'au moins un noeud (4 ; 4', 4", 4"') et les messages manipulés sont transmis à l'au moins un noeud (4 ; 4', 4", 4"'), **caractérisé en ce que** le dispositif (10) peut être activé et désactivé de manière ciblée, dans lequel celui-ci, à l'état désactivé, laisse passer sans manipulation les messages établis pour l'au moins un noeud (4 ; 4', 4", 4"') séparé du bus de données par le dispositif (10), et **en ce qu'**il est prévu entre les trames de messages (32) des temps morts (33) au cours desquels aucun message de communication n'est transmis, et **en ce que** le dispositif (10) active ou désactive les moyens (11) de manipulation des messages pendant les temps morts (33).
